# FASCICULE DE BREVET EUROPEEN

(11) **EP 0 496 651 B1**
(45) Date de publication et mention de la délivrance du brevet: **08.05.1996**
(21) Numéro de dépôt: 92400104.3
(22) Date de dépôt: 15.01.1992
(51) Int. Cl.: F16L 23/16

(54) **Joint d'étanchéité, notamment pour raccord à brides**
Dichtung, insbesondere für Flanschverbindung
Sealing, particularly for a flanged joint

(30) Priorité: 23.01.1991 FR 9100730
(43) Date de publication de la demande: 29.07.1992
(73) Titulaire: SOCIETE INDUSTRIELLE D'EQUIPEMENT MECANIQUE SUPRANITE, F-75854 Paris Cédex 17 (FR)
(72) Inventeur: Dennys, Jean-Pierre, F-92200 Neuilly sur Seine (FR)
(74) Mandataire: Levy, David

(56) Documents cités:
- EP-A- 0 364 407
- DE-A- 2 514 281
- FR-A- 2 524 113
- US-A- 3 888 496

## Description

La présente invention concerne un joint d'étanchéité, notamment pour raccord à brides.

L'étanchéité des raccords de tuyauteries par exemple qui sont susceptibles de subir des chocs thermiques fait de plus en plus appel au graphite expansé qui se substitue progressivement à l'amiante pour des raisons à la fois économiques, industrielles et de santé.

FR-A-2 517 789 concerne un joint d'étanchéité qui comprend une âme métallique annulaire comportant, sur chacune de ses faces opposées au moins un évidement ou rainure circulaire, espacé de son orifice central, dans laquelle est disposée une garniture en graphite expansé qui fait saillie au-dessus de ladite âme métallique de façon qu'après serrage, au moyen de brides appropriées, le graphite expansé affleure à l'âme métallique.

Dans certains cas, l'âme métallique est constituée par deux anneaux intérieur et extérieur, dont les faces en regard sont creusées de manière à présenter chacune une gorge de section en V, évasée vers l'extérieur.

Un des inconvénients est l'absence de liaison métallique stable entre les brides de serrage et chacun des anneaux extérieur et intérieur, du fait que les brides sont en contact avec l'âme en graphite expansé.

Pendant le rapprochement de serrage des anneaux métalliques, la partie du graphite qui est en saillie par rapport aux anneaux s'écrase et induit au sein du graphite un champ de pression irrégulier qui tend à déformer l'anneau intérieur de façon imprévisible, à l'écarter de l'anneau extérieur, à agrandir ce dernier sans qu'aucun obstacle extérieur n'intervienne pour limiter ou prévenir ces mouvements.

Du fait que l'écartement entre les deux anneaux métalliques augmente au cours du serrage, il s'ensuit que la densité de l'âme en graphite expansé qui est compris entre lesdits anneaux diminue; or, une telle diminution de densité est préjudiciable au joint d'étanchéité pendant son fonctionnement.

FR-A-2 573 837 concerne un joint d'étanchéité ayant la forme d'un anneau et comporte une âme annulaire en graphite expansé moulée entre deux anneaux métalliques intérieur et extérieur qui présentent l'un et l'autre un effet ressort suivant une direction qui est parallèle à l'axe de révolution du joint. Ces anneaux peuvent être réalisés selon plusieurs spires enroulées en spirale serrée.

Lors du serrage du joint, les ondulations des parois se déforment et permettent une compression de l'âme en graphite en sorte que les faces supérieure et inférieure de l'âme soient de niveau avec les anneaux métalliques aussi bien avant qu'après serrage du joint.

L'un des inconvénients d'un tel joint est l'amortissement irrégulier des caractéristiques de reprise élastique du joint par les frottements entre spires adjacentes qui nuit à la régénération des pressions de contact entre le graphite et les brides de serrage pendant les changements de pression et de température.

Un autre inconvénient est le confinement d'air et d'humidité entre les spires métalliques qui tend à provoquer des corrosions.

Un autre inconvénient est, comme pour le cas précédent, l'impossibilité pour l'utilisateur de réutiliser un couple d'anneaux métalliques, en général la partie la plus coûteuse, et de remplacer lui-même une âme en graphite qui aurait, en raison de sa fragilité, été détériorée pendant le montage et qui n'aurait pas les paramètres physiques, poids et densité, qui conviennent à l'état de l'assemblage auquel le joint est destiné.

FR 86 10 121 concerne un joint comportant au moins un couple de gainages métalliques annulaires bordant une face d'étanchéité du joint, les deux éléments de gainage métalliques annulaires intérieur et extérieur ayant chacun en section transversale la forme d'une cornière placée en un angle du joint. Chaque élément comprend une partie cylindrique annulaire dont la surface extérieure forme une partie de la surface latérale du joint et a une hauteur comprise entre 25 et 50 % de l'épaisseur du joint, et une partie transversale annulaire dont la surface extérieure fait en tout point de ses sections droites transversales, un angle de 90 à 120° avec la direction longitudinale de sa partie cylindrique annulaire et borde ladite face d'étanchéité et dont la largeur est comprise entre 10 et 45 % de la largeur du joint.

Ce dispositif présente l'inconvénient de multiplier les chemins non étanches en communication avec le fluide et de créer, en vis à vis et à une faible distance, des chemins prêts à évacuer les fuites provenant des premiers.

Comme dans le précédent document cité, des zones entre les surfaces métalliques confinées qui favorisent les corrosions sont créées.

La présente invention a pour objet de remédier aux inconvénients précités et de proposer un joint d'étanchéité dont les performances pratiques sont mieux maîtrisées, en particulier en présence d'assemblages de grands diamètres et de pressions élevées.

La présente invention est définie par la partie caractérisante de la revendication 1, le préambule se référant à des caractéristiques connues, par exemple du document FR-A-2573837.

Un avantage est que les brides agissent directement sur les anneaux de renfort et la force exercée sur ces derniers est transmise intégralement à la garniture pour la comprimer, le contact brides-anneaux empêchant ces derniers de se déplacer latéralement lors de la compression de la garniture.

Ces forces de frottement ainsi créées stabilisent chaque anneau de renfort dans sa position, dans sa forme et dans sa dimension.

Contrairement aux autres dispositifs décrits, il est facile d'immobiliser au moins un des anneaux de renfort sur la bride par un encastrement de faible profondeur, car chaque anneau métallique reste en appui sur une bride depuis le début du serrage et peut y être centré et engagé avant l'intervention de la force de serrage donc sans danger de détérioration pendant le serrage.

De plus, le joint est moins fragile, son âme en graphite étant non pas en saillie mais en léger retrait sur chaque face par rapport à l'un des anneaux métalliques, ce qui permet de la protéger au cours des manipulations.

Avec un jeu d'anneaux métalliques qui sont souvent d'un coût élevé, on peut stocker plusieurs âmes en graphite conditionnées séparément, leur mise en place ne nécessitant ni presse ni aucun matériel de fabrication.

Ces âmes en graphite peuvent constituer une gamme dans laquelle le dosage et la densification du graphite conviennent à une variété d'assemblages de dimensions identiques mais dont les caractéristiques mécaniques sont ou ont évolué à l'usage de façons différentes, une âme provisoire en graphite de faible densité permettant d'obtenir souvent une étanchéité suffisante sur un assemblage détérioré en attendant qu'il puisse être révisé.

La disposition et la forme des anneaux métalliques suivant la présente invention entraîne les avantages supplémentaires suivants :

la chambre destinée à la compression du graphite n'est ouverte au début du serrage des brides que sur un périmètre dont la longueur est divisée par 2 par rapport à FR-A-2 517 789, ce qui réduit au moins du même facteur les risques de pertes de graphite en poids donc en compression, donc en étanchéité.

La présente invention met en oeuvre une mise en pression du graphite par pénétration à coeur d'un relief (couteau) plus efficace et plus fiable que l'écrasement par la surface, principe auquel les descriptions qui précèdent sont liées, et ceci pour deux raisons :
d'une part, le graphite est déjà en contact avec les parois de la chambre, lorsqu'il subit la compression, et les forces de frottement sur ces parois tendent à le retenir à l'intérieur de la chambre, alors que ces mêmes forces de frottement s'opposent à l'introduction du graphite dans la chambre lorsque les couches de graphite soumises à la pression sont les couches extérieures en saillie par rapport à la chambre, ce qui est le cas dans les dispositifs existants;
d'autre part, le mode de compression par pénétration produit des zones de plus forte pression au coeur des sections de graphite qui ont tendance à alimenter les zones plus critiques par la réserve de pression qu'elles constituent alors que la compression par écrasement utilisée dans les systèmes antérieurs présente la caractéristique inversée, les zones soumises aux plus faibles pressions ayant tendance à attirer le graphite qui se trouve au voisinage du fluide à étancher.

D'autres avantages et caractéristiques ressortiront à la lecture de la description de plusieurs modes de réalisation de l'invention, ainsi que des dessins annexés sur lesquels :

la figure 1 est une vue en coupe partielle du joint suivant un premier mode de réalisation de l'invention, avant serrage du joint.

La figure 2 est une vue en coupe partielle d'un autre mode de réalisation de l'invention, avant serrage du joint.

La figure 3 est une vue en coupe identique à celle de la figure 2 mais après serrage du joint.

La figure 4 est une vue en coupe partielle d'un autre mode de réalisation de l'invention, avant serrage du joint.

La figure 5 est une vue en coupe partielle d'un autre mode de réalisation de l'invention, avant serrage du joint.

La figure 6 est une vue en coupe partielle d'un autre mode de réalisation de l'invention, après serrage du joint.

La figure 7 est une vue en coupe partielle d'un autre mode de réalisation de l'invention, avant serrage du joint.

Le joint d'étanchéité selon l'invention, comprend un anneau intérieur 1, un anneau extérieur 2 et une garniture annulaire en graphite expansé 3, ces éléments entourant un volume souvent de révolution autour d'un axe X-X, qui contient soit le fluide, soit l'un des fluides, soit l'ensemble des fluides à étancher.

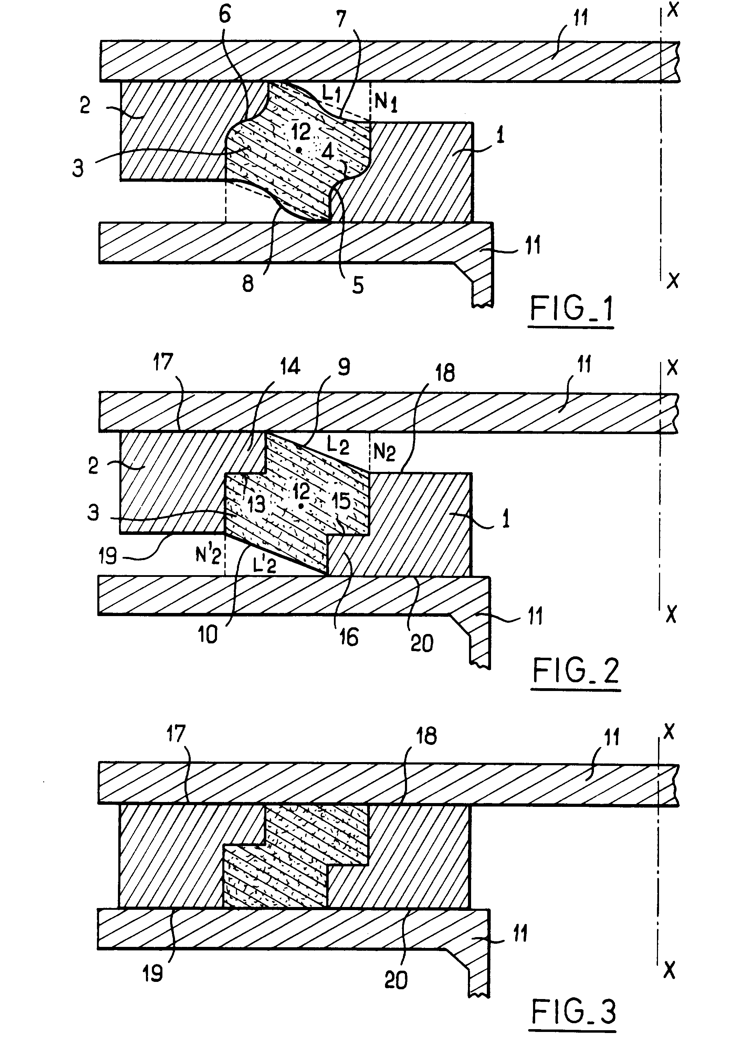

L'anneau intérieur 1 présente une zone d'appui 4 constituée sur la figure 1, par un rebord arrondi 5 ménagé à la partie inférieure, pour la garniture annulaire 3, l'anneau extérieur présentant également un rebord d'appui arrondi 6 mais qui est ménagé à la partie supérieure.

La garniture en graphite expansé 3 qui est disposée entre les anneaux intérieur 1 et extérieur 2 présente, en section droite, une forme comme celle représentée sur la figure 1, c'est-à-dire que les faces supérieure 7 et inférieure 8 sont arrondies, ou comme celle représentée sur la figure 2 avec des faces supérieure 9 et inférieure 10 inclinées. La pente des faces supérieure et inférieure de la garniture 3 est inférieure ou égale à "l'angle naturel de talus" du graphite expansé utilisé. L'angle naturel de talus est l'angle maximum tel que les forces exercées par des brides 11 sur les particules de graphite, pendant le serrage, restent orientées vers l'intérieur de la garniture sans provoquer un déplacement de ces particules vers les faces de contact 17 à 20 des anneaux métalliques sur les brides de serrage. En fait, il faut faire en sorte qu'il ne se produise pas une décohésion du graphite ou en d'autres termes que la pente soit assez faible pour éviter la décohésion du graphite.

Dans le cas de la figure 1, les anneaux intérieur 1 et extérieur 2 sont situés à des niveaux différents, la différence de niveau étant égale à N₁. La largeur de la garniture étant L₁, le rapport N₁/L₁ est sensiblement égal à la pente des faces supérieure 7 et inférieure 8 de la garniture 3. Comme il a été noté précédemment, la cohésion du graphite dépend de la valeur du rapport N₁/L₁.

De même, dans le cas de la figure 2, la différence de niveau N₂ entre les anneaux 1 et 2 et la largeur L₂ de la garniture 3 permettent de déterminer le rapport N₂/L₂ qui est sensiblement égal à la pente des faces supérieure 9 et inférieure 10 de ladite garniture 3.

Le joint, représenté sur la figure 2, comprend deux zones d'appui qui sont constituées l'une par un rebord 13 orienté vers le bas et ménagé à la partie extrême supérieure 14 de l'anneau extérieur 2, l'autre par un rebord 15 orienté vers le haut et ménagé à la partie extrême inférieure 16 de l'anneau intérieur 1. Les rebords 13 et 15 peuvent être symétriques par rapport au centre 12. De même, l'ensemble de la demi-section peut présenter une symétrie par rapport au centre 12 mais elle ne présente pas de symétrie par rapport à un axe.

Avant serrage, les éléments constitutifs du joint de la figure 2 occupent les positions représentées. Lorsque le joint est serré entre les brides 11, une force verticale est donc appliquée sur la face supérieure 17 de l'anneau extérieur 2, et sur la face intérieure 20 de l'anneau intérieur 1 ou encore simultanément sur lesdites faces 17 et 20. La garniture 3 se trouve alors comprimée et le graphite expansé remplit le triangle inférieur N′₂L′₂-10, ou le triangle supérieur N₂L₂ 9 ou encore les deux, de façon qu'après serrage, les faces supérieures 17 et 18 des anneaux 1 et 2 soient pratiquement et aux jeux près situées dans un même plan; il en est de même pour les faces inférieures 19 et 20, de façon que le joint se présente sous la forme représentée sur la figure 3.

Au cours du serrage, les deux anneaux de renfort extérieur 2 et intérieur 1 transmettent une partie de l'effort ou force de serrage des brides 11 à la garniture 3 (figure 2), tout en résistant à la pression que cet effort crée au sein de la garniture et en limitant la compression du graphite. En effet, du fait des orientations des zones d'appui 13 et 15, les résultantes des forces créées dans la garniture 3 sont situées dans la même direction mais sont orientées dans deux sens opposés.

On constate que la section occupée par le graphite est diminuée dans le cas des figures 2 et 3, de la surface N₂L₂ 9 ou N′₂L′₂ 10; de ce fait, le volume occupé par le graphite est également diminué.

Pour que le graphite puisse s'opposer au fluide à étancher, il est nécessaire que la quantité et plus précisément le poids de graphite emprisonné dans la chambre délimitée par les anneaux extérieur et intérieur et les brides, reste égale à un poids prédéterminé qui est choisi en fonction de l'utilisation du joint d'étanchéité selon l'invention.

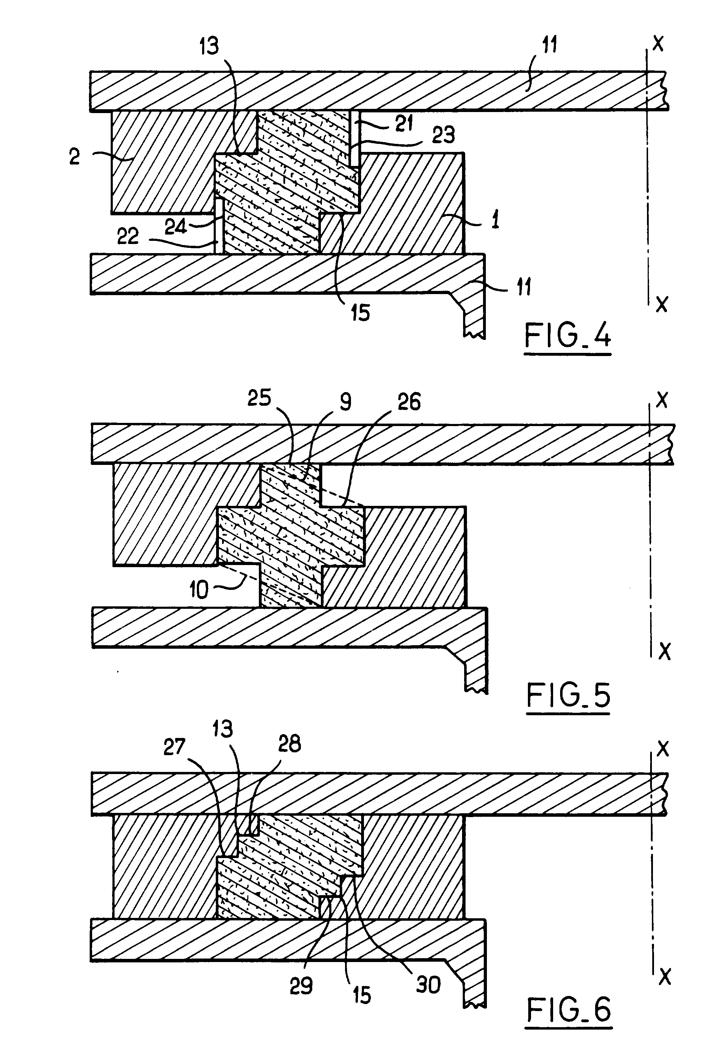

Suivant une variante du joint selon l'invention, représentée sur la figure 4, deux éléments annulaires 21 et 22 de préférence métalliques, sont disposés sur les faces verticales ou parois cylindriques 23,24 de la garniture d'étanchéité 3.

L'élément annulaire 21 est décalé en hauteur par rapport à l'anneau 1 et l'élément annulaire 22 est décalé en hauteur par rapport à l'anneau 2, le décalage en hauteur des éléments annulaires 21 et 22, par rapport aux anneaux respectifs 1 et 2, étant de valeur égale à la différence de niveau entre les anneaux intérieur 1 et extérieur 2.

La largeur des éléments annulaires 21 et 22 est telle que, lorsque le joint est serré entre les brides 11, lesdits éléments ne viennent pas en contact ou en appui sur les rebords 13 et 15, de façon à éviter un marquage nuisible sur les brides 11.

Selon un autre mode de réalisation de l'invention représenté sur la figure 5, les faces virtuelles supérieure 9 et 10 de la garniture 3 en graphite expansé, représentées en pointillés sur la figure, sont en forme de marches d'escalier 25,26 mais disposées de façon que la pente desdites faces virtuelles 9 et 10 soit inférieure ou égale à l'angle de talus.

Selon un autre mode de réalisation de l'invention représenté sur la figure 6, les zones d'appui 4,5,13 ou 14, des anneaux intérieur 1 et extérieur 2, sont constituées chacune par une série de rebords, par exemple deux rebords, les uns 27, 28 ménagés à la partie supérieure de l'anneau extérieur 2, les autres 29, 30 ménagés à la partie inférieure de l'anneaux intérieur 1.

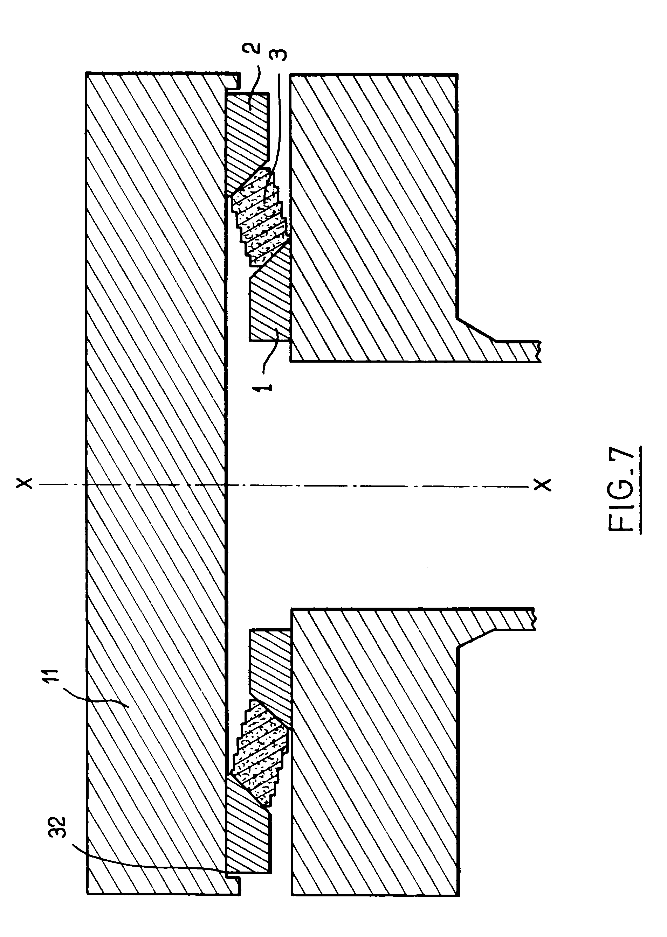

Selon un autre mode de réalisation de l'invention représenté sur la figure 7, au moins un des anneaux, par exemple l'anneau extérieur 2 est partiellement encastré, avant le début de serrage, dans la bride correspondante 11. L'encastrement 32 préalable de l'anneau extérieur 2 dans la bride correspondante 11 permet de centrer le joint par rapport aux moyens de serrage, de limiter l'expansion du joint sous la pression intérieure du graphite et de supprimer en majeure partie le flottement du joint.

L'encastrement de l'anneau intérieur 1 dans sa bride correspondante permet non seulement de centrer le joint par rapport aux moyens de serrage et de supprimer en majeure partie le flottement du joint, mais également de limiter la contraction de l'anneau métallique intérieur de manière à éviter une déformation locale et aléatoire dudit anneau intérieur 1.

L'ensemble joint d'étanchéité et brides de serrage présente un axe de symétrie qui est l'axe X-X. Mais lorsqu'on considère la demi-section, droite ou gauche du joint, on constate qu'il n'y a pas d'axe de symétrie mais seulement un centre de symétrie 12 représenté sur la figure 1.

## Revendications

1. Joint d'étanchéité démontable destiné à être serré entre deux brides de serrage (11) espacées axialement, comprenant une garniture d'étanchéité (3) en graphite expansé disposée entre deux anneaux de renfort intérieur (1) et extérieur (2) espacés radialement et dont les faces de contact sont en appui sur les faces latérales de ladite garniture, caractérisé en ce que la face supérieure de l'anneau extérieur (2) est décalée axialement de la face supérieure de l'anneau intérieur (1), la pente des faces virtuelles supérieure et inférieure (7, 8) de la garniture d'étanchéité étant au plus égal à l'angle de talus naturel du graphite expansé et en ce que la garniture d'étanchéité est radialement confinée entre les surfaces d'appui des anneaux de renfort.

2. Joint d'étanchéité selon la revendication 1, caractérisé en ce que la surface de contact de chaque anneau est constituée par une zone d'appui ménagée sur un épaulement supérieur (13) pour l'un des anneaux et inférieur (15) pour l'autre anneau, les deux zones d'appui étant orientées l'une vers l'autre.

3. Joint d'étanchéité selon la revendication 2, caractérisé en ce que chacun des épaulements est constitué par des rebords (27, 28) en marches d'escalier.

4. Joint d'étanchéité selon la revendication 1, caractérisé en ce qu'en section droite et avant serrage du joint, les faces supérieure (7, 9, 26) et inférieure (8, 10) de la garniture d'étanchéité (3, 11) présentent chacune une pente.

5. Joint d'étanchéité selon la revendication 4, caractérisé en ce qu'en section droite et avant serrage du joint, les faces supérieure et inférieure de la garniture d'étanchéité sont en marches d'escalier (25, 26).

6. Joint d'étanchéité selon l'une des revendications 1 à 3, caractérisé en ce que la garniture d'étanchéité (3) est munie de deux éléments annulaires métalliques (21, 22) disposés sur les faces latérales de ladite garniture d'étanchéité, lesdits éléments annulaires étant décalés en hauteur par rapport à leurs anneaux respectifs (1, 2) d'une valeur sensiblement égale à la différence de niveau entre les anneaux extérieur (2) et intérieur (1).

7. Joint d'étanchéité selon l'une des revendications précédentes, caractérisé en ce que les anneaux extérieur (2) et intérieur (1) sont métalliques.

8. Joint d'étanchéité selon l'une des revendications précédentes, caractérisé en ce qu'avant serrage, la demi-section du joint ne présente pas de symétrie par rapport à un axe.

9. Joint d'étanchéité selon l'une des revendications précédentes, caractérisé en ce qu'au moins un des anneaux intérieur (1) et/ou extérieur (2) est encastré partiellement dans la bride correspondante (11).

## Patentansprüche

1. Abnehmbare Dichtung, vorgesehen zwischen zwei axial voneinander räumlich getrennten Spannflanschen (11) zusammengedrückt zu werden, und bestehend aus einer Dichtungseinheit (3) aus Graphit, die ausgedehnt zwischen einem inneren (1) und äußeren (2) radial räumlich voneinander getrennten Verstärkungsring angeordnet ist, wobei die Kontaktflächen der Verstärkungsringe auf die lateralen Oberflächen der Dichtungseinheit drücken,
**dadurch gekennzeichnet**, daß
die höherliegende Oberfläche des äußeren Ringes (2) axial von der höherliegenden Oberfläche des inneren Ringes (1) abgesetzt ist, die Neigung der höher- und tieferliegenden (7, 8) virtuellen Oberflächen der Dichtungseinheit höchstens gleich dem natürlichen Neigungswinkel des ausgedehnten Graphits ist, und daß die Dichtungseinheit radial von den Druckflächen der Verstärkungsringe begrenzt wird.

2. Dichtung nach Anspruch 1, dadurch gekennzeichnet, daß die Kontaktfläche jedes Ringes eine ausgesparte Druckzone an einer höherliegenden Kante (13) eines der Ringe und einer tieferliegenden Kante (15) des anderen der Ringe aufweist, wobei die beiden Druckzonen einander gegenüberliegend sind.

3. Dichtung nach Anspruch 2, dadurch gekennzeichnet, daß jede der Kanten aus Stufen (27, 28) besteht, die eine Treppe bilden.

4. Dichtung nach Anspruch 1, dadurch gekennzeichnet, daß auf dem geraden Abschnitt und vor dem Verbindungsdruck die höher liegenden (7, 9, 26) und tieferliegenden (8, 10) Oberflächen der Dichtungseinheit (3, 11) jeweils eine Neigung bilden.

5. Dichtung nach Anspruch 4, dadurch gekennzeichnet, daß auf dem geraden Abschnitt und vor dem Verbindungsdruck die höherliegende und tieferliegende Oberfläche eine Treppenform bilden (25, 26).

6. Dichtung nach einem der Ansprüche 1 bis 3, dadurch gekennzeichnet, daß die Dichtungseinheit (3) mit zwei ringförmigen Metallelementen (21, 22) versehen ist, die auf den lateralen Oberflächen der Dichtungseinheit angeordnet sind, wobei die ringförmigen Elemente in ihrer Höhe bezüglich ihrer jeweiligen Ringe (1, 2) um einen Betrag versetzt sind, der sehr genau dem Unterschied des Niveaus des äußeren (2) und inneren (1) Rings entspricht.

7. Dichtung nach einem der vorstehenden Ansprüche, dadurch gekennzeichnet, daß der äußere (2) und innere (1) Ring aus Metall besteht.

8. Dichtung nach einem der vorstehenden Ansprüche, dadurch gekennzeichnet, daß vor dem Spannen der Halbschnitt der Dichtung keine axiale Symmetrie aufweist.

9. Dichtung nach einem der vorstehenden Ansprüche, dadurch gekennzeichnet, daß wenigstens einer der inneren (1) und/oder äußeren (2) Ringe teilweise in den korrespondierenden Flansch (11) eingelassen ist.

## Claims

1. Removable sealing gasket for use between a pair of axially spaced compressing flanges (11) comprising a seal ring (3) of expanded graphite disposed between radially spaced inner (1) and outer (2) reinforcement rings of which the engagement surfaces engage the lateral faces of said seal ring, characterized by the fact that the upper face of the outer inner reinforcement ring (2) is axially offset from the upper face of the inner reinforcement ring (1), the angles of slope of the virtual upper and inner faces of the seal ring (1) being not greater than the natural angle of slope of the expanded graphite, and in that the seal ring is radially confined between the engagement surfaces of the reinforcement rings.

2. A sealing gasket according to claim 1, wherein the contact surface of each ring is constituted by a bearing zone formed on a top shouldered portion (13) of one ring and on a bottom shouldered portion (15) of the other ring, the two bearing zones being oriented towards each other.

3. A sealing gasket according to claim 2, wherein each shouldered portion is constituted by ledges (27, 28) in the form of stair-steps.

4. A sealing gasket according to claim 1, wherein the top (7, 9, 26) and bottom (8, 10) faces of the sealing rings (3, 11) each have a slope in cross-section and prior to clamping of the gasket.

5. A sealing gasket according to claim 4, wherein the top and bottom faces of the sealing rings are in the form of stair-steps (25, 26) in cross-section and prior to clamping of the gasket.

6. A sealing gasket according to one of claims 1 to 3, wherein the sealing ring (3) is provided with two metallic annular members (21, 22) placed on the lateral faces of said sealing ring, said annular members being offset in height with respect to their respective rings (1, 2) by a value substantially equal to the difference in level between the outer (2) and inner (1) rings.

7. A sealing gasket according to any of the preceding claims, wherein the outer and inner rings are of metal.

8. A sealing gasket according to any of the preceding claims, wherein the half-section of the gasket does not have any symmetry with respect to an axis prior to clamping.

9. A sealing gasket according to any of the preceding claims, wherein at least one of the inner (1) and/or outer (2) rings is partially inserted in the corresponding flange (11).
